# EUROPEAN PATENT APPLICATION

(11) **EP 4 020 265 A1**
(43) Date of publication of application: **29.06.2022**
(21) Application number: 21216301.8
(22) Date of filing: 21.12.2021
(51) Int. Cl.: G06F 21/10, G06F 21/60, H04L 9/40, H04W 12/10

(54) **METHOD AND DEVICE FOR STORING ENCRYPTED DATA**

(30) Priority: 25.12.2020 CN 202011567499
(71) Applicant: Shanghai Kunyao Network Science & Technology Co., Ltd., Shanghai 200233 (CN)
(72) Inventor: LI, Xin, Shanghai, 200233 (CN); SHI, Taosheng, Shanghai, 200233 (CN); WANG, Lin, Shanghai, 200233 (CN)
(74) Representative: V.O.

(57) **Abstract**

The purpose of this application is to provide a method, system, and device for storing encrypted data. This application obtains original data to be encrypted, and uses a first hash function to hash the original data to be encrypted to generate an encryption key; uses a second hash function to hash the original data to be encrypted to obtain first authentication metadata; encrypts an original file used to store the original data based on the encryption key to generate an encryption file, and performs hash calculation on the encrypted file based on the second hash function to obtain second authentication metadata; generates a content descriptor based on the first hash function, the first authentication metadata, and the second authentication metadata; stores the encrypted file, the first authentication metadata, and the second authentication metadata in a file using the content descriptor as identification information to obtain an encrypted storage file; so as to realize deduplication and search of encrypted data, and both backward compatibility and privacy.

## Description

### FIELD OF THE INVENTION

This application relates to the computer field, and in particular to a method and device for encrypted data storage.

### BACKGROUND

Private data often needs to be stored via encryption, and the key for encrypted storage is often possessed separately by each user. Therefore, even if the original data is the same, the encrypted data is completely different, which makes it impossible to delete encrypted duplicate data. At the same time, encryption algorithms are constantly evolving. With the development of technology and the continuous iteration of hardware, the security of some encryption algorithms and hashing algorithms may be threatened, so user encryption algorithms may change. In the case of encryption algorithms evolvement, how to identify and delete duplicate encrypted data at the same time is still a problem to be solved.

The realization of data encryption and ciphertext search under the data deduplication scenario is a research hotspot in the field of cloud storage security. In order to achieve data deduplication under the condition of user data encryption, cloud storage systems often adopt convergence encryption technology or introduce additional independent servers. However, these mechanisms have defects such as the threat of offline brute force attacks and cost limitations.

Furthermore, a server-side data deduplication scheme based on password authenticated key exchange (PAKE) protocol is proposed. In the scheme, users compare private information with each other and share keys, and this solution does not require additional servers to achieve cross-user data deduplication. The scheme's advantage is that it not only allows users to encrypt data locally, but also prevents brute force attacks from malicious users or server. On the other hand, in order to resist brute force attacks, Belare et al. introduced a key management server into the server-side data deduplication scheme. Puzio et al. designed a block-level data deduplication scheme under the cloud storage system, and introduced additional encryption operations and access control mechanisms on the basis of convergence encryption to resist dictionary attacks. However, the general problem of these methods is that they are implemented in specific scenarios and require a dedicated management server. They are not universal and lack the native support of the file system. In addition, data security and privacy protection are increasingly being valued by the industry, and it has become the norm for users to upload encrypted data. As far as the current implementation is concerned, encryption is usually set by the user to achieve privacy protection. In this way, even if the original data is the same, the encrypted data is completely different. Data deduplication becomes a problem.

On the other hand, cryptography is constantly evolving and encryption technology is constantly improving. The industry needs a scalable and universal encryption structure. The academia's mechanisms for data encryption are mainly divided into two categories: identity-based encryption mechanisms and attribute-based encryption mechanisms. Identity-based encryption mechanism means that any two users do not need to exchange private or public keys to achieve secure communication and identity authentication. The attribute-based encryption mechanism uses the user identity determined by the user attribute set to generate the key, so that users with the same attribute can decrypt the ciphertext. The problem with the attribute-based encryption mechanism is the complexity of user authority control and the leakage of identity privacy. As a result, the sharing granularity of encrypted data is too coarse, leading to the need to frequently upload the key to a third party, which is difficult to apply to the environment of data outsourcing.

Ciphertext search is a key technology corresponding to data encryption. Searches based on plaintext keywords require users to directly decrypt their stored data or decrypt them after downloading, which can easily lead to malicious users or service providers stealing users' private information, resulting in that it is not suitable for encrypted storage systems. The current research progress is to establish a multi-keyword ranking ciphertext search mechanism based on a single keyword or Boolean keyword ciphertext search. Among them, the data owner uploads the encrypted file and its encrypted searchable index to the storage server, and the data user obtains the retrieval trapdoor corresponding to its multiple keywords through the search control mechanism, and then sends the information to the storage server. After the server receives the request, it searches and sorts, and finally returns the search results. In the search, the correlation between the file and the query keyword is calculated using the K-nearestneighbor (kNN) technology based on the inner product similarity, and random variables are added to the request vector, and a fake keyword has been added to the binary vector of the file data. Therefore, when a server that only obtains ciphertext data receives a retrieval trapdoor, it becomes more difficult to analyze its correlation. However, if background knowledge such as the correlation between two retrieval trapdoors is known, the cloud server can obtain private information such as keywords through scale analysis. Therefore, adding multiple false keywords to the binary vector of the file data can protect the privacy of the keywords used when searching for files. Adding some blank words in the keyword dictionary, that is, set 0 in the binary vector of the corresponding data is to support dynamic operations such as adding, modifying and deleting files.

One area related to ciphertext search is content addressing, such as IPFS (Interplanetary File System) storage network, which calculates a hash value for each data block and compares the hash values to see if the content has been stored; and if the content has been stored, the existing data can be directly used and retrieved. There is currently no research on content addressing based on encrypted data content.

In summary, many existing storage systems have implemented data deduplication and content addressing (search), but these systems have not dealt with the following problems:
1. This kind of data deduplication and content addressing (search) can only be performed on unencrypted data. If data with the same content is encrypted and the ciphertext is different, data deduplication and content addressing cannot be implemented.
2. This method of data deduplication and encryption must have to compare user content. In most cases, the content belongs to different users, and the storage system must calculate based on the content of different users, which is a breach of user privacy protection.
3. Existing encryption systems and encryption applications are customized and dedicated systems, which are not resolved by protocol mechanisms, and lack scalability and backward compatibility.

### SUMMARY

One purpose of this application is to provide a method and device for encrypted data storage, which solves the problems in the prior art that the encrypted duplicate data cannot be identified and deleted, and the existing system lacks scalability and backward compatibility.

According to one aspect of the present application, there provides a method for encrypted data storage, the method including:
obtaining original data to be encrypted, using a first hash function to hash the original data to be encrypted, and generating an encryption key;
performing hash calculation on the original data to be encrypted using a second hash function to obtain first authentication metadata;
encrypting an original file for storing the original data based on the encryption key, generating an encrypted file, and performing hash calculation on the encrypted file based on the second hash function to obtain second authentication metadata;
generating a content descriptor based on the first hash function, the first authentication metadata, and the second authentication metadata; and
storing the encrypted file, the first authentication metadata and the second authentication metadata in a file using the content descriptor as identification information to obtain an encrypted storage file.

Optionally, encrypting an original file for storing the original data based on the encryption key and generating an encrypted file comprises:
encrypting the original file for storing the original data based on the encryption key and a designated encryption function, and generating a designated encrypted file.

Optionally, performing hash calculation on the encrypted file based on the second hash function to obtain second authentication metadata comprises:
performing hash calculation on the designated encrypted file based on the second hash function to obtain the second authentication metadata;
generating a content descriptor based on the first hash function, the first authentication metadata, and the second authentication metadata includes:
generating the content descriptor based on the first hash function, the first authentication metadata, the second authentication metadata, and the designated encryption function.

Optionally, generating the content descriptor based on the first hash function, the first authentication metadata, and the second authentication metadata comprises:
generating the content descriptor based on the first hash function, the second hash function, the first authentication metadata, the second authentication metadata, and the designated encryption function.

Optionally, the method comprises:
sending the content descriptor to an user, and obtaining a retrieval result after the user retrieves the encrypted storage file based on the content descriptor.

Optionally, after obtaining the retrieval result after the user retrieves the encrypted storage file based on the content descriptor, the method comprises:
when the retrieval result is that the encrypted storage file is retrieved, decompressing the encrypted storage file to obtain an encrypted file and second authentication metadata;
verifying the encrypted file according to the second authentication metadata and the second hash function in the content descriptor to obtain a verification result;
using the encryption key and the designated encryption function in the content descriptor to decrypt the encrypted file that has passed verification based on the verification result to obtain the original file;
verifying the original file according to the first hash function and the first authentication metadata in the content descriptor, and feeding back the original file that has passed verification to the user.

According to another aspect of the present application, there also provides a system for encrypted data storage, the system includes a data acquisition module, a data processing module, a data encryption module, a data identification module, and a data storage module,
the data acquisition module is configured to acquire original data to be encrypted, and use a first hash function to hash the original data to be encrypted to generate an encryption key;
the data processing module is configured to use a second hash function to perform a hash calculation on the original data to be encrypted to obtain first authentication metadata;
the data encryption module is configured to encrypt the original file used to store the original data based on the encryption key to generate an encrypted file, and perform a hash calculation on the encrypted file based on the second hash function to obtain second authentication metadata;
the data identification module is configured to generate a content descriptor based on the first hash function, the first authentication metadata, and the second authentication metadata;
the data storage module is configured to store the encrypted file, the first authentication metadata, and the second authentication metadata in a file using the content descriptor as identification information to obtain an encrypted storage file.

According to another aspect of the present application, there also provides a computer-readable medium having computer-readable instructions stored thereon, and the computer-readable instructions can be executed by a processor to implement a method according to any of the foregoing methods.

According to another aspect of the present application, there also provides a device for encrypted data storage, and the device includes:
one or more processors; and
a memory storing computer-readable instructions, and the computer-readable instructions, when executed, cause the processors to perform the operation of a method according to any one of the foregoing methods.

Compared with the prior art, this application obtains original data to be encrypted, and uses a first hash function to hash the original data to be encrypted to generate an encryption key; uses a second hash function to hash the original data to be encrypted to obtain first authentication metadata; encrypts an original file used to store the original data based on the encryption key to generate an encryption file, and performs hash calculation on the encrypted file based on the second hash function to obtain second authentication metadata; generates a content descriptor based on the first hash function, the first authentication metadata, and the second authentication metadata; stores the encrypted file, the first authentication metadata, and the second authentication metadata in a file using the content descriptor as identification information to obtain an encrypted storage file. Therefore, it is possible to perform data deduplication and search for encrypted data, and there is no need to compare the contents of users' files, which protects users' private information, improves scalability and backward compatibility, and can be applied to different systems.

### BRIEF DESCRIPTION OF THE DRAWING(S)

By reading the detailed description of the non-limiting embodiments with reference to the following drawings, other features, purposes and advantages of the present application will become more apparent:
FIG. 1 shows a schematic flow chart of a method for storing encrypted data according to an aspect of the present application;
FIG. 2 shows a schematic diagram of an encrypted storage file in a specified format in a preferred embodiment of the present application;
FIG. 3 shows a schematic flowchart of a method for acquiring a content descriptor in a preferred embodiment of the present application;
FIG. 4 shows a schematic diagram of an application scenario of encrypted storage and retrieval of encrypted storage files in a preferred embodiment of the present application;
Fig. 5 shows a schematic structural diagram of a framework for a system for encrypted data storage according to another aspect of the present application.

The same or similar reference signs in the drawings represent the same or similar components.

### DETAILED DESCRIPTION

The application will be further described in details below in conjunction with the accompanying drawings.

In a typical configuration of this application, the terminal, the equipment of the service network, and the trusted party all include one or more processors (CPU), input/output interfaces, network interfaces, and memory.

Memory may include non-permanent memory in computer-readable media, random access memory (RAM) and/or non-volatile memory, such as read-only memory (ROM) or flash memory (flash RAM). Memory is an example of computer readable media.

Computer-readable media includes permanent and non-permanent, removable and non-removable media, and information storage can be realized by any method or technology. The information can be computer-readable instructions, data structures, program modules, or other data. Examples of computer storage media include, but are not limited to, phase change random access memory (PRAM), static random access memory (SRAM), dynamic random access memory (DRAM), other types of random access memory (RAM), read-only memory (ROM), electrically erasable programmable read-only memory (EEPROM), flash memory or other memory technology, CD-ROM, digital versatile disc (DVD) or other optical storage, magnetic cassettes, magnetic tape disk storage or other magnetic storage devices or any other non-transmission media can be used to store information that can be accessed by computing devices. According to the definition in this article, computer-readable media does not include nontransitory computer-readable media, such as modulated data signals and carrier waves.

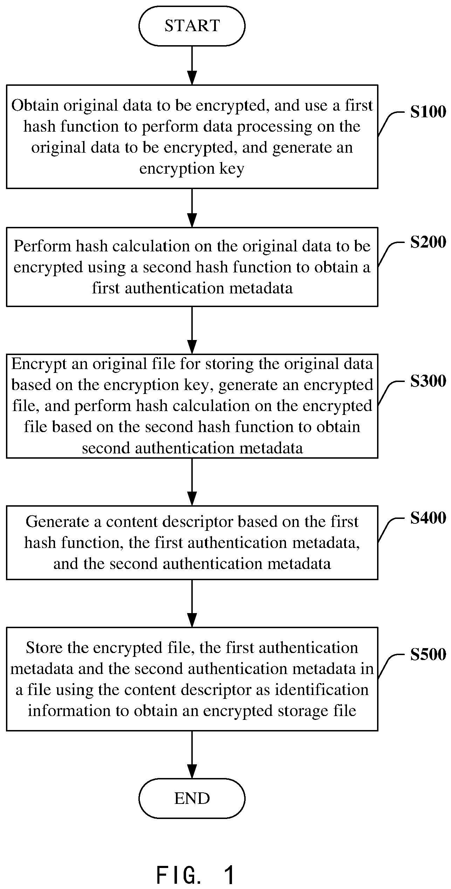

FIG. 1 shows a schematic flow chart of a method for storing encrypted data according to an aspect of the present application. The method includes: S100, obtaining original data to be encrypted, and using a first hash function to perform data processing on the original data to be encrypted, and generating an encryption key; S200, performing hash calculation on the original data to be encrypted using a second hash function to obtain first authentication metadata; S300, encrypting an original file for storing the original data based on the encryption key, generating an encrypted file, and performing hash calculation on the encrypted file based on the second hash function to obtain second authentication metadata; S400, generating a content descriptor based on the first hash function, the first authentication metadata, and the second authentication metadata; S500, storing the encrypted file, the first authentication metadata and the second authentication metadata in a file using the content descriptor as identification information to obtain an encrypted storage file. Therefore, it is possible to perform data deduplication and search for encrypted data, and there is no need to compare the contents of users' files, which protects users' private information, improves scalability and backward compatibility, and can be applied to different systems.

Specifically, in S100, it obtains original data to be encrypted, and uses a first hash function to perform data processing on the original data to be encrypted, and generates an encryption key. In this step, the original data to be encrypted is calculated using the first hash function, and the obtained hash data is the encryption key. Therefore, when the original data to be encrypted are the same and the hash function is the same, the obtained encryption keys are the same. The original data itself is used to generate content as encryption keys through a specific hash algorithm. This is vital to realize data deduplication while realizing data encryption.

In S200, it performs hash calculation on the original data to be encrypted using a second hash function to obtain first authentication metadata. In this step, the hash data obtained by calculating the original data to be encrypted using the second hash function is the first authentication metadata, wherein the first authentication metadata is used to detect whether the decrypted data obtained after decryption is consistent with the original data to be encrypted.

In S300, it encrypts an original file for storing the original data based on the encryption key, generates an encrypted file, and performs hash calculation on the encrypted file based on the second hash function to obtain second authentication metadata. In this step, the encryption may use a designated encryption method to obtain an encrypted file. After the second authentication metadata is obtained, the consistency of the encrypted data may be verified according to the designated encryption method and the second authentication metadata.

In S400, it generates a content descriptor based on the first hash function, the first authentication metadata, and the second authentication metadata. In this step, the first hash function only needs to encode its corresponding type information into the content descriptor. For any original data, if the first hash function, the second hash function, and the second authentication element being used are the same, the same original data will get the same encryption result through the same encryption method. However, it is only possible to know the encryption key if the original data is known. Based on the content descriptor, the public can learn the name of the first hash function, the name of the second hash function, the first authentication metadata, and the second authentication metadata in this application. Through such content descriptors, the file data after encryption can be directly retrieved without the need to decrypt user privacy in the original data. Also, it is beneficial to identify encrypted data that are duplicated, which leads to realize data deduplication and retrieval of the encrypted data, improve the scalability and backward compatibility and it can be used in different systems.

In S500, it stores the encrypted file, the first authentication metadata and the second authentication metadata in a file using the content descriptor as identification information to obtain an encrypted storage file. In this step, the encrypted storage file may be a storage file in a specified format, and the storage file in a specified format includes the encrypted file, the first authentication metadata, and the second authentication metadata. The first authentication metadata and the second authentication metadata are recorded in the content descriptor, which is used as identification information to identify the encrypted file, and an encrypted storage file stored in a specified format is obtained.

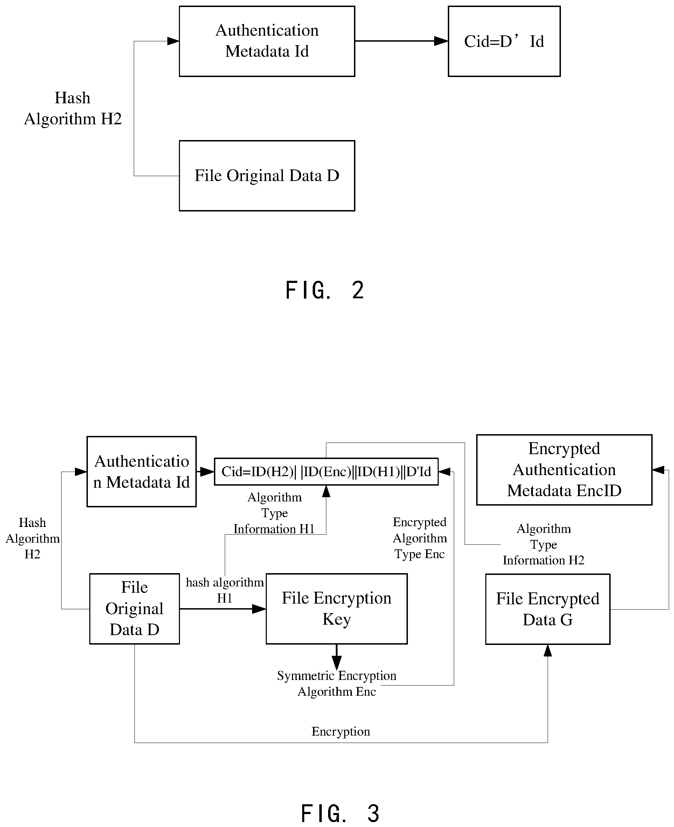

FIG. 2 shows a schematic diagram of an encrypted storage file in a specified format in a preferred embodiment of the present application. The encrypted storage file in a specified format is composed of original data and hash information of the original data. The role of authentication metadata is to verify the consistency and completeness of the original data. In addition, the file content descriptor (Cid) is introduced as the only identifier before and after file encryption. The Cid information will contain authentication metadata.

In a preferred embodiment of the present application, in S300, the original file used to store the original data is encrypted based on the encryption key and the designated encryption function to generate a designated encrypted encrypted file. Herein, the designated encryption method may be a symmetric data encryption method, and the original file used to store the original data is encrypted based on the encryption key and the symmetric data encryption function to generate a symmetricallyencrypted encrypted file.

In a preferred embodiment of the present application, in S300, it performs hash calculation on the designated encrypted file based on the second hash function to obtain the second authentication metadata, and it generates the content descriptor based on the first hash function, the first authentication metadata, the second authentication metadata, and the designated encryption function. Herein, the designated encryption function may only encode its corresponding encryption function type into the content descriptor, so as to further simplify the content of the content descriptor. In this application, the encryption method and hash function used are all data available to the public, but the encrypted data file can be decrypted only when the original data to be encrypted is known.

In a preferred embodiment of the present application, in S300, it generates the content descriptor based on the first hash function, the second hash function, the first authentication metadata, the second authentication metadata, and the designated encryption function. Herein, the type information of the first hash function, the type information of the second hash function, the first authentication metadata, the second authentication metadata, and the encryption function type corresponding to the designed encryption function are encoded into the content descriptor. Through such content descriptor, the encrypted file data can be directly retrieved without decrypting the user privacy in the original data, and it is convenient to identify the duplicate encrypted data. As a result, it can realize data deduplication and retrieval of encrypted data, improve the scalability and backward compatibility, and can be applied to different systems.

FIG. 3 shows a schematic flow chart of a method for acquiring content descriptors in a preferred embodiment of the present application. The first hash function is identified as hash algorithm H1, the second hash function is identified as hash algorithm H2, the first authentication metadata are identified as the authentication metadata Id, and the second authentication metadata are identified as EncID. Based on the original file data D, the file encryption key (key) is obtained after calculation using the first hash function, and the file original data D is encrypted using the symmetric encryption algorithm Enc and the file encryption key to obtain the file encrypted data G. The original file data D is calculated using the hash algorithm H2 to obtain the authentication metadata Id, and the authentication metadata Id is encoded to obtain D'Id, which is written into the file content descriptor (Cid); after that, write the algorithm type information ID (HI) of the hash algorithm H1 into the content descriptor containing D'Id, and the ID (Enc) obtained after encoding through the symmetric encryption algorithm type Enc is written into content descriptor containing ID (HI) and D'Id; then write the hash algorithm H2 algorithm type information ID (H2) into the content descriptor containing ID (Enc), ID (HI) and D'Id, and finally get Cid=ID(H2) | | ID(Enc) | | ID(H1) | | D'Id. It should be noted that the ID in this embodiment is a constant definition, which supports extension, and is used to define different algorithms. The hash algorithm in each link is replaceable, which effectively realizes backward compatibility.

In a preferred embodiment of the present application, the content descriptor is sent to the user, and the retrieval result after the user retrieves the encrypted storage file based on the content descriptor is obtained. Herein, the user can retrieve the encrypted file after obtaining the content descriptor.

In a preferred embodiment of the present application, after obtaining the search result after the user retrieves the encrypted storage file based on the content descriptor, when the search result is that the encrypted storage file is retrieved, decompress the encrypted storage file to obtain an encrypted file and second authentication metadata; verify the encrypted file according to the second authentication metadata and the second hash function in the content descriptor to obtain a verification result; based on the verification result, the encrypted file that has passed the verification is decrypted using the encryption key and the designated encryption function in the content descriptor to obtain the original file; according to the first hash function and the first authentication metadata in the content descriptor, the original file is verified, and the original file that has passed the verification is fed back to the user. Herein, based on the content descriptor, users can retrieve and decrypt encrypted files. The method facilitates the identification of duplicate encrypted data, and can realize data deduplication and retrieval of encrypted data, improve scalability and backward compatibility, and be applied to different systems.

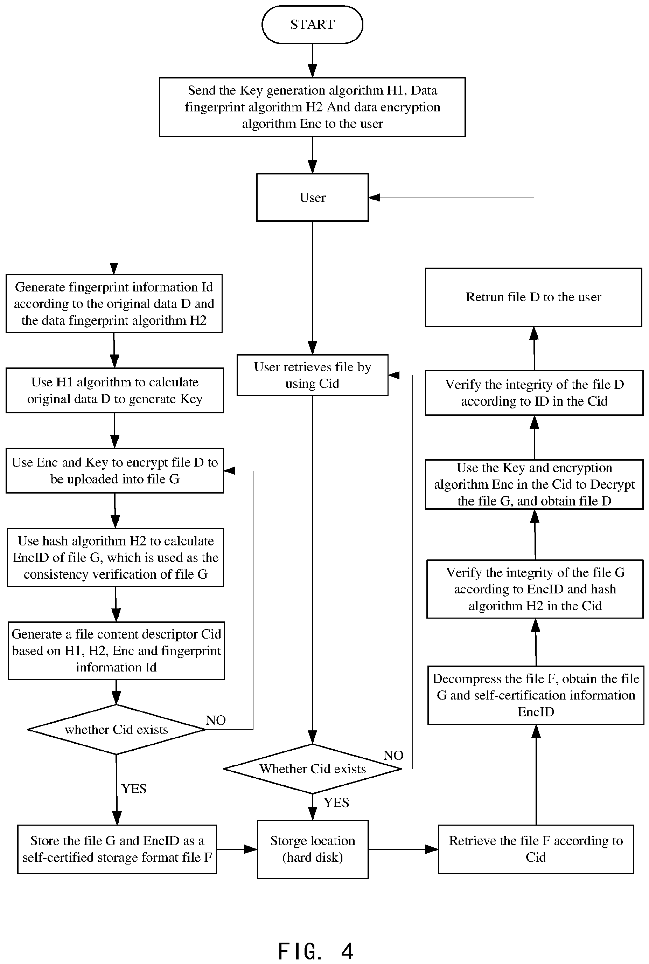

FIG. 4 shows a schematic diagram of an encrypted storage and retrieval application scenario of encrypted storage files in a preferred embodiment of the present application, wherein the first hash function is preferably a key generation algorithm H1, and the second hash function is preferably a data fingerprint algorithm H2. After the user obtains the original data D, the original data D is encrypted and stored according to the key generation algorithm H1, the data fingerprint algorithm H2, and the data encryption algorithm Enc. First, it generates fingerprint information Id according to the original data D and the data fingerprint algorithm H2, uses H1 algorithm to calculate original data D to generate a key, uses Enc and key to encrypt file D to be uploaded into file G, uses hash algorithm H2 to calculate EncID of the file G, which is used as the consistency verification of the file G, and generates a file content descriptor (Cid) based on H1, H2, Enc and fingerprint information Id. At this time, it determines whether the Cid exists. If so, it stores the file G and EncID as a self-certified storage format file F which is then saved into the corresponding storage location, such as hard disk; if not, it regenerates Cid.

Following the above embodiment, after the user uses the Cid to retrieve the file, when the corresponding file object exists, the file F can be obtained according to the above Cid. After the file F is decompressed, the file G and the self-certification information EncID are obtained. The EncID and the hash algorithm H2 in the Cid verifies the integrity of the file G, and then the method uses the Key and the encryption algorithm Enc in the Cid to decrypt the file G, obtains the file D, verifies the integrity of the file D according to the Id in the Cid, and returns File D to the user when the verification is passed.

The embodiments of the present application also provide a computer-readable medium on which computer-readable instructions are stored, and the computer-readable instructions can be executed by a processor to implement any one of the foregoing mentioned method for storing encrypted data.

Corresponding to the method described above, this application also provides a terminal, which includes modules or units capable of executing the steps of the method described in FIG. 1 or FIG. 2 or FIG. 3 or FIG. 4. The modules or units can be implemented by hardware, software, or a combination of software and hardware, which are not limited in this application. For example, in an embodiment of the present application, a device for encrypted data storage is also provided, and the device includes:
one or more processors; and
a memory storing computer-readable instructions, and the computer-readable instructions, when executed, cause the processors to perform the operation of a method according to any one of the foregoing mentioned method for storing encrypted data.

For example, when the computer-readable instructions are executed, the one or more processors: obtain original data to be encrypted, use a first hash function to hash the original data to be encrypted, and generate an encryption key; perform hash calculation on the original data to be encrypted using a second hash function to obtain first authentication metadata; encrypt an original file for storing the original data based on the encryption key, generate an encrypted file, and perform hash calculation on the encrypted file based on the second hash function to obtain second authentication metadata; generate a content descriptor based on the first hash function, the first authentication metadata, and the second authentication metadata; and store the encrypted file, the first authentication metadata and the second authentication metadata in a file using the content descriptor as identification information to obtain an encrypted storage file.

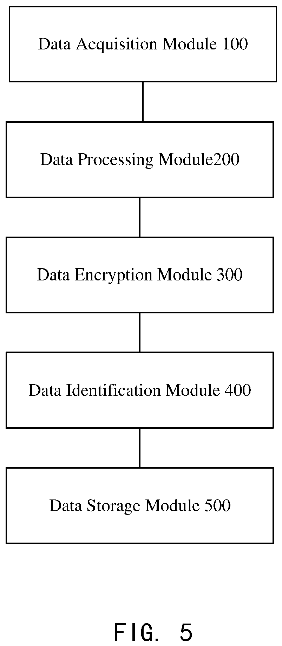

FIG. 5 shows a schematic diagram of a framework structure of a system for encrypted data storage according to another aspect of the present application. The system includes a data acquisition module 100, a data processing module 200, a data encryption module 300, a data identification module 400 and a data storage module 500. Among them, the data acquisition module 100 is configured to acquire original data to be encrypted, and use a first hash function to hash the original data to be encrypted to generate an encryption key; the data processing module 200 is configured to use a second hash function to perform a hash calculation on the original data to be encrypted to obtain first authentication metadata; the data encryption module 300 is configured to encrypt the original file used to store the original data based on the encryption key to generate an encrypted file, and perform a hash calculation on the encrypted file based on the second hash function to obtain second authentication metadata; the data identification module 400 is configured to generate a content descriptor based on the first hash function, the first authentication metadata, and the second authentication metadata; the data storage module 500 is configured to store the encrypted file, the first authentication metadata, and the second authentication metadata in a file using the content descriptor as identification information to obtain an encrypted storage file. As a result, it is possible to perform data deduplication and search for encrypted data, and there is no need to compare the contents of users' files, which protects users' private information, improves scalability and backward compatibility, and it can be applied to different systems.

It should be noted that the contents executed by the data acquisition module 100, the data processing module 200, the data encryption module 300, the data identification module 400, and the data storage module 500 are respectively the same or correspondingly same as those performed by the above steps S100, S200, S200, S300 and S400. For the sake of brevity, the details are not repeated herein.

In a preferred embodiment of the present application, the data storage module 500 is further configured to send the content descriptor to the user, and obtain the retrieval result after the user retrieves the encrypted storage file based on the content descriptor.

In a preferred embodiment of the present application, the data processing module 200 is further configured to decompress the encrypted storage file when the search result is that the encrypted storage file is retrieved, and the encrypted file and the second authentication metadata are obtained; verify the encrypted file according to the second authentication metadata and the second hash function in the content descriptor to obtain a verification result; decrypt the encyrpted file that passess verification by using the encryption key and the content descriptor based on the verification result, and the original file is obtained; verify the original file according to the first hash function and the first authentication metadata in the content descriptor, and feed back the original file that has passed the verification to the user.

It should be noted that the content executed by the data processing module 200 and the data storage module 500 is the same or correspondingly the same as the corresponding execution content in the foregoing method embodiment. For the sake of brevity, the details will not be repeated herein.

Obviously, those skilled in the art can make various changes and modifications to the application without departing from the spirit and scope of the application. In this way, if these modifications and variations of this application fall within the scope of the claims of this application and their equivalent technologies, this application also intends to include these modifications and variations.

It should be noted that this application can be implemented in software and/or a combination of software and hardware. For example, it can be implemented by using an application specific integrated circuit (ASIC), a general purpose computer or any other similar hardware device. In an embodiment, the software program of the present application may be executed by a processor to realize the steps or functions described above. Similarly, the software program (including related data structures) of the present application can be stored in a computer-readable recording medium, for example, RAM memory, magnetic or optical drives or floppy disks and similar devices. In addition, some steps or functions of the present application may be implemented by hardware, for example, as a circuit that cooperates with a processor to execute each step or function.

In addition, a part of this application can be applied as a computer program product, such as a computer program instruction, when it is executed by a computer, through the operation of the computer, the method and/or technical solution according to this application can be invoked or provided. The program instructions for invoking the method of this application may be stored in a fixed or removable recording medium, and/or be transmitted through a data stream in a broadcast or other signal-bearing medium, and/or be stored in accordance with the program instructions run in the working memory of the computer equipment. Herein, an embodiment according to the present application includes a device including a memory for storing computer program instructions and a processor for executing the program instructions, and when the computer program instructions are executed by the processor, trigger the device to operate the method based on the aforementioned methods and/or technical solutions according to multiple embodiments of the present application.

For those skilled in the art, it is obvious that the present application is not limited to the details of the foregoing exemplary embodiments, and the present application can be implemented in other specific forms without departing from the spirit or basic characteristics of the application. Therefore, no matter from which point of view, the embodiments should be regarded as exemplary and non-limiting. The scope of this application is defined by the appended claims rather than the above description, and therefore it is intended to fall into the claims. All changes within the meaning and scope of the equivalent elements of are included in this application. Any reference signs in the claims should not be regarded as limiting the claims involved. In addition, it is obvious that the word "including" does not exclude other units or steps, and the singular number does not exclude the plural number. Multiple units or devices stated in the device claims can also be implemented by one unit or device through software or hardware. The first, second and other words are used to indicate names, but do not indicate any specific order.

## Claims

1. A method for storing encrypted data, **characterized in** the method includes:
obtaining original data to be encrypted, using a first hash function to hash the original data to be encrypted, and generating an encryption key;
performing hash calculation on the original data to be encrypted using a second hash function to obtain first authentication metadata;
encrypting an original file for storing the original data based on the encryption key, generating an encrypted file, and performing hash calculation on the encrypted file based on the second hash function to obtain second authentication metadata;
generating a content descriptor based on the first hash function, the first authentication metadata, and the second authentication metadata; and
storing the encrypted file, the first authentication metadata and the second authentication metadata in a file using the content descriptor as identification information to obtain an encrypted storage file.

2. The method according to claim 1, **characterized in** encrypting an original file for storing the original data based on the encryption key and generating an encrypted file comprises:
encrypting the original file for storing the original data based on the encryption key and a designated encryption function, and generating a designated encrypted file.

3. The method according to claim 2, **characterized in** performing hash calculation on the encrypted file based on the second hash function to obtain second authentication metadata comprises:
performing hash calculation on the designated encrypted file based on the second hash function to obtain the second authentication metadata;
wherein generating a content descriptor based on the first hash function, the first authentication metadata, and the second authentication metadata includes:
generating the content descriptor based on the first hash function, the first authentication metadata, the second authentication metadata, and the designated encryption function.

4. The method according to claim 3, **characterized in** generating the content descriptor based on the first hash function, the first authentication metadata, and the second authentication metadata comprises:
generating the content descriptor based on the first hash function, the second hash function, the first authentication metadata, the second authentication metadata, and the designated encryption function.

5. The method according to claim 4, **characterized in** the method comprises:
sending the content descriptor to an user, and obtaining a retrieval result after the user retrieves the encrypted storage file based on the content descriptor.

6. The method according to claim 5, **characterized in** after obtaining the retrieval result after the user retrieves the encrypted storage file based on the content descriptor, the method comprises:
when the retrieval result is that the encrypted storage file is retrieved, decompressing the encrypted storage file to obtain an encrypted file and second authentication metadata;
verifying the encrypted file according to the second authentication metadata and the second hash function in the content descriptor to obtain a verification result;
using the encryption key and the designated encryption function in the content descriptor to decrypt the encrypted file that has passed verification based on the verification result to obtain an original file;
verifying the original file according to the first hash function and the first authentication metadata in the content descriptor, and feeding back the original file that has passed verification to the user.

7. A system for encrypted data storage, **characterized in** the system includes a data acquisition module, a data processing module, a data encryption module, a data identification module, and a data storage module, wherein:
the data acquisition module is configured to acquire original data to be encrypted, and use a first hash function to hash the original data to be encrypted to generate an encryption key;
the data processing module is configured to use a second hash function to perform a hash calculation on the original data to be encrypted to obtain first authentication metadata;
the data encryption module is configured to encrypt the original file used to store the original data based on the encryption key to generate an encrypted file, and perform a hash calculation on the encrypted file based on the second hash function to obtain second authentication metadata;
the data identification module is configured to generate a content descriptor based on the first hash function, the first authentication metadata, and the second authentication metadata;
the data storage module is configured to store the encrypted file, the first authentication metadata, and the second authentication metadata in a file using the content descriptor as identification information to obtain an encrypted storage file.

8. A computer-readable medium having computer-readable instructions stored thereon, **characterized in** the computer-readable instructions can be executed by a processor to implement a method according to any one of claims 1 to 6.

9. A device for encrypted data storage, **characterized in** the device includes:
one or more processors; and
a memory storing computer-readable instructions, and the computer-readable instructions, when executed, cause the processors to perform the operation of a method according to any one of claims 1 to 6.
